# EUROPEAN PATENT SPECIFICATION

(11) **EP 2 742 289 B1**
(45) Date of publication and mention of the grant of the patent: **18.01.2017**
(21) Application number: 12769724.1
(22) Date of filing: 08.08.2012
(51) Int. Cl.: F23R 3/00, F23M 5/00

(54) **CERAMIC TILE FOR COMBUSTION CHAMBERS LINING, IN PARTICULAR OF GAS TURBINES, AND MANUFACTURING METHOD THEREOF**
KERAMIKPLATTE ZUR AUSKLEIDUNG VON BRENNKAMMERN, INSBESONDERE VON GASTURBINEN, UND HERSTELLUNGSVERFAHREN DAFÜR
CARREAU DE CÉRAMIQUE POUR LE REVÊTEMENT INTÉRIEUR DE CHAMBRES DE COMBUSTION, EN PARTICULIER DE TURBINES À GAZ, ET SON PROCÉDÉ DE FABRICATION

(30) Priority: 08.08.2011 IT MI20111519
(43) Date of publication of application: 18.06.2014
(73) Proprietor: Ansaldo Energia S.p.A., Genova (IT)
(72) Inventor: PERO, Filippo, I-16154 Genova (IT); GUALCO, Giuseppe Carlo, I-16126 Genova (IT); VACCAREZZA, Attilio, I-16148 Genova (IT)
(74) Representative: Cernuzzi, Daniele
(86) International application number: PCT/IB2012/054038
(87) International publication number: WO 2013/021354

(56) References cited:
- EP-B1- 0 960 308
- US-A- 4 810 677
- US-A1- 2008 090 005
- US-A1- 2010 003 504
- MORE K L ET AL: "Evaluating environmental barrier coatings on ceramic matrix composites after engine and laboratory exposures", PROCEEDINGS OF THE ASME TURBO EXPO 2002 : PRESENTED AT THE 2002 ASME TURBO EXPO, JUNE 3 - 6, 2002, AMSTERDAM, THE NETHERLANDS, AMERICAN SOCIETY OF MECHANICAL ENGINEERS, NEW YORK, NY, vol. 4 A, 3 June 2002 (2002-06-03), pages 155-162, XP002609408, ISBN: 978-0-7918-3609-5

## Description

### TECHNICAL FIELD

The present invention concerns a ceramic tile for lining combustion chambers, in particular of gas turbines, and the manufacturing method thereof.

### BACKGROUND ART

As is known, the inner walls of gas turbine combustion chambers for the production of electricity require an effective thermal protection, since they are exposed to hot gases at high temperature which, at times, are also highly corrosive.

For said purpose, ceramic tiles are used, which are applied for example on the structure walls of the combustion chamber. In general, ceramic materials are potentially suitable for this application, since they offer good thermal protection and have low conductivity.

Nevertheless, the internal environment of a gas turbine combustion chamber is particularly aggressive and subjects the ceramic tiles to high levels of stress, not only thermal but also corrosive and mechanical, hence not all ceramic materials are suitable for the purpose.

To improve the resistance of ceramic tiles, in particular to corrosion and erosion, the tiles are provided with a further coating.

For example, coatings are known consisting of one single layer of alumina, deposited by means of slurry process (i.e. deposition of a layer of suspension of alumina particles in a suitable dispersant means, followed by sintering treatment).

A limit of the known coatings is represented by their high porosity (typical values around 30%), which reduces their capacity to protect the underlying material, especially in the presence of corrosive chemical species and water vapour in the combustion gas.

A second limit of the known coatings is the excessive difference between the thermal expansion coefficients of the coating layer material and the base material of which the tile is made, which reduces the resistance of the coating to the thermal cycles, favouring the detachment thereof.

A third limit lies in the limited repeatability of the slurry process.

US2008/090005A1, US2010/003504A1 and More K.L. et al. "Evaluating environmental barrier coatings on ceramic matrix composites after engine and laboratory exposure", disclose ceramic tiles coated with a multilayer ceramic coating, comprising an alumina containing ceramic outer layer, and a intermediate layer, arranged between the outer layer and the tile base body and containing mullite and alumina. The tile body does not contain mullite nor alumina.

EP 0 960 308 B1 discloses a ceramic tile according to the preamble of claim 1. The base body is made of silica or alumina, and the outer layer of the ceramic coating may be made of alumina.

### DISCLOSURE OF INVENTION

One object of the present invention is to provide a ceramic tile for lining combustion chambers, in particular of gas turbines, and a relative manufacturing method which are free from the drawbacks highlighted here of the known art.

In particular, one object of the invention is to produce, in a relatively simple inexpensive manner, a tile which is fully suitable for use in a gas turbine combustion chamber, and is therefore particularly resistant to high temperatures, corrosive attacks and mechanical stress.

The present invention therefore concerns a ceramic tile for lining combustion chambers, in particular of gas turbines, as claimed by claim 1.

According to preferred embodiments of the invention, the intermediate layer is made of mullite or alumina-mullite, the outer layer is made of alumina, or comprises alumina as the main component, and the base body is made of alumina-mullite.

The invention also relates to a method for manufacturing ceramic tiles for lining combustion chambers, in particular of gas turbines, as claimed by claim 6.

In particular, the method comprises a first step of deposition of the intermediate layer on the face of the base body (corresponding to the surface facing into the combustion chamber, on the hot gases side), in which mullite powder or a mixture of powders containing mullite powder is sprayed on the face of the base body by means of a plasma torch to form the intermediate layer; and a second step of deposition of the outer layer on the intermediate layer, in which alumina powder or a mixture of powders containing alumina powder is sprayed on an outer face of the intermediate layer by means of a plasma torch to form the outer layer.

Tiles produced according to the present invention are fully suitable for use in combustion chambers of gas turbines for the production of electricity; the coatings have reduced porosity and high uniformity and therefore ensure suitable protection for the underlying base material of the tile. The adhesion between the coating and the base material of the tile is strong and not subject to detachment even in very harsh operating conditions.

The use of a multi-layer coating prolongs the life of the coating compared, for example, to coatings made of pure alumina or other materials: due to the different thermal expansion coefficient of the tile and the two coatings, during heating of the tile the intermediate layer of mullite is in a condition of tensile stress, while the layer of alumina is in compression, thus reducing the possibility of detachment of the alumina coating, which constitutes the ambient barrier.

The particular manufacturing technique eliminates any problem of reproducibility of the results and ensures that each tile produced has the desired characteristics, in particular reducing or eliminating the presence of surface discontinuities and/or cracks through which water vapour and polluting agents can penetrate and reach the base material of the tile.

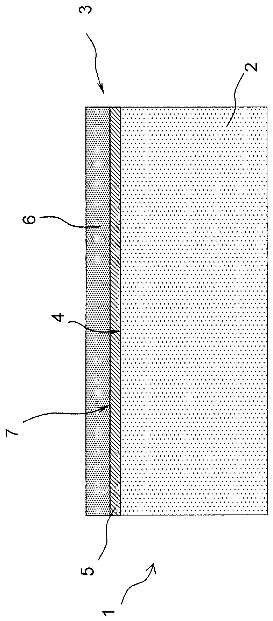

### BRIEF DESCRIPTION OF THE DRAWING

Further characteristics and advantages of the present invention will become clear from the following description of a nonlimiting implementation example thereof, with reference to the attached figure which is a schematic view in cross section of a ceramic tile for lining combustion chambers, in particular of gas turbines, produced according to the invention.

### BEST MODE FOR CARRYING OUT THE INVENTION

In the attached figure the reference number 1 indicates a ceramic tile for lining combustion chambers, in particular of gas turbines; the tile 1 comprises a base body 2, made of ceramic material, and a coating 3 applied to at least one face 4 of the base body 2 intended in use to face into the combustion chamber in which the tile 1 is fitted.

The base body 2 is made of ceramic material, for example alumina or, preferably, an alumina-mullite biphasic system.
The base body 2 is formed by pressing in a mould the required powders, for example alumina powder (corundum) or a mixture of mullite and alumina powders (corundum).

The ceramic material of the base body 2 is then sintered in a furnace to obtain the prescribed physical and mechanical characteristics.

The coating 3 is a multilayer ceramic coating, comprising at least one first layer 5, arranged in contact with the face 4 of the base body 2, and at least one second layer 6, arranged above the first layer 5 and defining an outer layer of the tile 1.

The first layer 5, which is positioned between the base body 2 and the second layer 6 and defines an intermediate layer of the tile 1, is made of a ceramic material comprising mullite; for example, the layer 5 is made of mullite or alumina-mullite; in general, the layer 5 contains mullite as the main component (the layer therefore contains mullite in a quantity equal to approximately 50% or more by weight of the overall material of the layer).

Preferably, the layer 5 has a thickness of between approximately 50 and approximately 100 micrometres.

The second layer 6 (outer layer of the tile 1) is made of ceramic material comprising alumina and is preferably made of alumina, or comprises alumina as the main component (the layer therefore contains alumina in a quantity greater than 50% by weight of the overall material of the layer).

Preferably, the layer 6 has a thickness of between approximately 200 and approximately 400 micrometres.

In accordance with the invention, the layers 5, 6 of the coating 3 are deposited by respective air plasma spray (APS) processes carried out in succession.

In general, in an air plasma spray process, the material to be deposited on a substrate is introduced into the nozzle of a plasma torch, where the material is melted by the high temperature of the plasma and sprayed onto the substrate. When the particles of material strike the substrate, they cool and solidify rapidly, depositing on the substrate.

In particular, the method of producing the tile 1 comprises the steps of:
- providing the base body 2 in ceramic material;
- depositing on the face 4 of the base body 2 the layer 5 (of mullite or alumina-mullite or in any case containing mullite) by means of a first APS process, in which mullite powder (or a mixture of powders, including mullite powder) is sprayed on the face 4 by means of a plasma torch to form the layer 5;
- depositing on the layer 5 the layer 6 of alumina (or containing alumina) by means of a second APS process, in which alumina powder (or a mixture of powders, including alumina powder) is sprayed on an outer face 7 of the layer 5 by means of a plasma torch to form the layer 6.

The tile 1 is obtained provided with the multilayer coating 3: the outer layer 6 constitutes an effective barrier to the corrosive action of the water vapour and protects the material of the base body 2 from corrosion and erosion; the inner layer 5 allows optimal formation of the outer layer 6 and optimal anchoring thereof, offering the advantages previously described. Lastly, it is understood that further modifications and variations that do not depart from the scope of the attached claims can be made to the ceramic tile for lining combustion chambers, in particular of gas turbines, and to the related manufacturing method described and illustrated herein.

## Claims

1. A ceramic tile (1) for combustion chambers lining, in particular of gas turbines, comprising a base body (2) made of alumina or alumina-mullite, and a coating (3) applied onto at least one face (4) of the base body (2); the coating (3) being a multi-layer ceramic coating, comprising at least one outer layer (6) made of a ceramic material comprising alumina, and at least one intermediate layer (5), positioned between the outer layer (6) and the base body (2) and made of a ceramic material ; the tile being **characterized in that** the the ceramic material of the intermediate layer (5) comprises mullite.

2. A tile according to claim 1, wherein the intermediate layer (5) is made of mullite or alumina-mullite.

3. A tile according to claim 1 or 2, wherein the intermediate layer (5) has a thickness ranging between about 50 and about 100 micrometres.

4. A tile according to one of the preceding claims, wherein the outer layer (6) is made of alumina, or comprises alumina as a main component.

5. A tile according to one of the preceding claims, wherein the outer layer (6) has a thickness ranging between about 200 and about 400 micrometres.

6. A method for manufacturing ceramic tiles for combustion chambers lining, in particular of gas turbines, the method comprising the steps of:
- providing a base body (2), made of ceramic material, of a tile (1), the base body (2) being made of alumina or alumina-mullite;
- depositing onto a face (4) of the base body (2) a multi-layer ceramic coating (3), comprising at least one outer layer (6) made of a ceramic material comprising alumina, and at least one intermediate layer (5), positioned between the outer layer (6) and the base body (2) and made of a ceramic material comprising mullite; said layers (5, 6) of the coating (3) being deposited by means of respective air plasma spray processes carried out in succession.

7. A method according to claim 6, comprising a first step of deposition of the intermediate layer (5) onto the face (4) of the base body (2), in which mullite powder or a mixture of powders containing mullite powder is sprayed onto the face (4) of the base body (2) by means of a plasma torch for forming the intermediate layer (6); and a second step of deposition of the outer layer (6) on the intermediate layer (5), in which alumina powder or a mixture of powders containing alumina powder is sprayed onto an outer face (7) of the intermediate layer (5) by means of a plasma torch for forming the outer layer (6).

8. A method according to claim 6 or 7, wherein the intermediate layer (5) is made of mullite or alumina-mullite.

9. A method according to one of claims 6 to 8, wherein the intermediate layer (5) has a thickness ranging between about 50 and about 100 micrometres.

10. A method according to one of claims 6 to 9, wherein the outer layer (6) is made of alumina, or comprises alumina as a main component.

11. A method according to one of claims 6 to 10, wherein the outer layer (6) has a thickness ranging between about 200 and about 400 micrometres.

## Patentansprüche

1. Keramikplatte (1) für eine Brennkammerauskleidung, insbesondere von Gasturbinen, die einen Basiskörper (2), der aus Aluminiumoxid oder Aluminiumoxid-Mullit hergestellt ist, und eine Beschichtung (3), die auf wenigstens einer Seite (4) des Basiskörpers (2) aufgebracht ist, umfasst; wobei die Beschichtung (3) eine keramische Mehrfachbeschichtung ist, die wenigstens eine äußere Schicht (6), die aus einem keramischen Material, das Aluminiumoxid umfasst, hergestellt ist, und wenigstens eine Zwischenschicht (5), die zwischen der äußeren Schicht (6) und dem Basiskörper (2) positioniert ist, und aus einem keramischen Material hergestellt ist, umfasst;
wobei die Platte **dadurch gekennzeichnet ist, dass** das keramische Material der Zwischenschicht (5) Mullit umfasst.

2. Platte nach Anspruch 1, wobei die Zwischenschicht (5) aus Mullit oder Aluminiumoxid-Mullit hergestellt ist.

3. Platte nach Anspruch 1 oder 2, wobei die Zwischenschicht (5) eine Dicke aufweist, die im Bereich von etwa 50 bis etwa 100 Mikrometern liegt.

4. Platte nach einem der vorhergehenden Ansprüche, wobei die äußere Schicht (6) aus Aluminiumoxid hergestellt ist oder Aluminiumoxid als einen Hauptbestandteil umfasst.

5. Platte nach einem der vorhergehenden Ansprüche, wobei die äußere Schicht (6) eine Dicke aufweist, die im Bereich von etwa 200 bis etwa 400 Mikrometern liegt.

6. Verfahren zum Herstellen von Keramikplatten für eine Brennkammerauskleidung, insbesondere von Gasturbinen, wobei das Verfahren die folgenden Schritte umfasst:
- Bereitstellen eines Basiskörpers (2), der aus keramischem Material hergestellt ist, von einer Platte (1), wobei der Basiskörper (2) aus Aluminiumoxid oder Aluminiumoxid-Mullit hergestellt ist;
- Abscheiden einer keramischen Mehrfachbeschichtung (3) auf einer Seite (4) des Basiskörpers (2), wobei die Mehrfachbeschichtung wenigstens eine äußere Schicht (6), die aus einem keramischen Material hergestellt ist, das Aluminiumoxid umfasst, und wenigstens einer Zwischenschicht (5), die zwischen der äußeren Schicht (6) und dem Basiskörper (2) positioniert ist und aus einem keramischen Material hergestellt ist, das Mullit umfasst, umfasst; wobei die Schichten (5, 6) der Beschichtung (3) mittels entsprechender Luftplasmasprühverfahren abgeschieden werden, die nacheinander ausgeführt werden.

7. Verfahren nach Anspruch 6, das einen ersten Schritt zum Abscheiden der Zwischenschicht (5) auf der Seite (4) des Basiskörpers (2), bei dem Mullitpulver oder eine Mischung aus Pulvern, die Mullitpulver enthalten, auf die Seite (4) des Basiskörpers (2) mittels eines Plasmabrenners zum Bilden der Zwischenschicht (6) gesprüht wird; und einen zweiten Schritt zum Abscheiden der äußeren Schicht (6) auf der Zwischenschicht (5), bei dem Aluminiumoxidpulver oder eine Mischung von Pulvern, die Aluminiumoxidpulver enthalten, auf eine äußere Seite (7) der Zwischenschicht (5) mittels eines Plasmabrenners zum Bilden der äußeren Schicht (6) gesprüht wird, umfasst.

8. Verfahren nach Anspruch 6 oder 7, wobei die Zwischenschicht (5) aus Mullit oder Aluminiumoxid-Mullit hergestellt wird.

9. Verfahren nach einem der Ansprüche 6 bis 8, wobei die Zwischenschicht (5) eine Dicke aufweist, die im Bereich von etwa 50 bis etwa 100 Mikrometern liegt.

10. Verfahren nach einem der Ansprüche 6 bis 9, wobei die äußere Schicht (6) aus Aluminiumoxid hergestellt ist oder Aluminiumoxid als einen Hauptbestandteil umfasst.

11. Verfahren nach einem der Ansprüche 6 bis 10, wobei die äußere Schicht (6) eine Dicke aufweist, die im Bereich von etwa 200 bis etwa 400 Mikrometern liegt.

## Revendications

1. Carreau de céramique (1) pour le revêtement de chambres de combustion, en particulier de turbines à gaz, comprenant un corps de base (2) en alumine ou en alumine-mullite, et un revêtement (3) appliqué sur au moins une face (4) du corps de base (2) ; le revêtement (3) étant un revêtement céramique multicouche, comprenant au moins une couche externe (6) en un matériau céramique comprenant de l'alumine, et au moins une couche intermédiaire (5), positionnée entre la couche externe (6) et le corps de base (2) et en un matériau céramique ; le carreau étant **caractérisé en ce que** le matériau céramique de la couche intermédiaire (5) comprend de la mullite.

2. Carreau selon la revendication 1, dans lequel la couche intermédiaire (5) est en mullite ou en alumine-mullite.

3. Carreau selon la revendication 1 ou 2, dans lequel la couche intermédiaire (5) a une épaisseur se situant entre environ 50 et environ 100 micromètres.

4. Carreau selon l'une quelconque des revendications précédentes, dans lequel la couche externe (6) est en alumine, ou comprend de l'alumine en tant que composant principal.

5. Carreau selon l'une des revendications précédentes, dans lequel la couche externe (6) a une épaisseur se situant entre environ 200 et environ 400 micromètres.

6. Procédé de fabrication de carreaux de céramique pour le revêtement de chambres de combustion, en particulier de turbines à gaz, le procédé comprenant les étapes de :
- fourniture d'un corps de base (2), en matériau céramique, d'un carreau (1), le corps de base (2) étant en alumine ou en alumine-mullite ;
- dépôt sur une face (4) du corps de base (2) d'un revêtement céramique multicouche (3), comprenant au moins une couche externe (6) en un matériau céramique comprenant de l'alumine, et au moins une couche intermédiaire (5), positionnée entre la couche externe (6) et le corps de base (2) et en un matériau céramique comprenant de la mullite ; lesdites couches (5, 6) du revêtement (3) étant déposées au moyen de procédés de projection plasma sous air respectifs réalisés successivement.

7. Procédé selon la revendication 6, comprenant une première étape de dépôt de la couche intermédiaire (5) sur la face (4) du corps de base (2), dans laquelle une poudre de mullite ou un mélange de poudres contenant de la poudre de mullite est pulvérisé sur la face (4) du corps de base (2) au moyen d'une torche à plasma pour former la couche intermédiaire (6) ; et une seconde étape de dépôt de la couche externe (6) sur la couche intermédiaire (5), dans laquelle une poudre d'alumine ou un mélange de poudres contenant de la poudre d'alumine est pulvérisé sur une face externe (7) de la couche intermédiaire (5) au moyen d'une torche à plasma pour former la couche externe (6).

8. Procédé selon la revendication 6 ou 7, dans lequel la couche intermédiaire (5) est en mullite ou en alumine-mullite.

9. Procédé selon l'une des revendications 6 à 8, dans lequel la couche intermédiaire (5) a une épaisseur se situant entre environ 50 et environ 100 micromètres.

10. Procédé selon l'une des revendications 6 à 9, dans lequel la couche externe (6) est en alumine, ou comprend de l'alumine en tant que composant principal.

11. Procédé selon l'une des revendications 6 à 10, dans lequel la couche externe (6) a une épaisseur se situant entre environ 200 et environ 400 micromètres.
